# EUROPÄISCHE PATENTSCHRIFT

(11) **EP 2 753 445 B1**
(45) Veröffentlichungstag und Bekanntmachung des Hinweises auf die Patenterteilung: **18.11.2015**
(21) Anmeldenummer: 12778193.8
(22) Anmeldetag: 07.09.2012
(51) Int. Cl.: B23C 5/22, B23C 5/24, B23C 5/06

(54) **FRÄSWERKZEUG**
MILLING TOOL
OUTIL DE FRAISAGE

(30) Priorität: 08.09.2011 AT 5032011
(43) Veröffentlichungstag der Anmeldung: 16.07.2014
(73) Patentinhaber: Ceratizit Austria Gesellschaft m.b.H., 6600 Reutte (AT)
(72) Erfinder: BRANDHOFER, Hannes, A-6652 Elbigenalp (AT); BURTSCHER, Peter, A-6651 Häselgehr (AT); DUWE, Jürgen, A-6611 Heiterwang (AT); LEGRAND, Lionel, F-22410 Plourhan (FR)
(74) Vertreter: Ciesla, Dirk
(86) Internationale Anmeldenummer: PCT/AT2012/000229
(87) Internationale Veröffentlichungsnummer: WO 2013/033739

(56) Entgegenhaltungen:
- EP-A1- 0 308 951
- WO-A1-88/08767
- FR-A5- 2 094 446

## Beschreibung

Die vorliegende Erfindung betrifft ein Fräswerkzeug mit einem Grundkörper, der eine vorgegebene Rotationsachse und zumindest eine Ausnehmung zur Aufnahme eines auswechselbaren Schneideinsatzes und eine in der Ausnehmung lösbar befestigte Kassette aufweist.

Insbesondere zur zerspanenden Bearbeitung von metallischen Werkstoffen sind Fräswerkzeuge bekannt, die einen Grundkörper aufweisen, der eine Mehrzahl von, z.B. in Umfangsrichtung regelmäßig beabstandeten, Ausnehmungen aufweist, in denen auswechselbare Schneideinsätze angeordnet werden können. Die auswechselbaren Schneideinsätze können dabei insbesondere als Wendeschneidplatten ausgebildet sein, die eine Mehrzahl von sukzessiv separat einsetzbaren Schneidkantenabschnitten aufweisen. Es sind insbesondere derartige Fräswerkzeuge bekannt, bei denen die auswechselbaren Schneideinsätze derart an dem Grundkörper befestigbar sind, dass diese mit jeweiligen Schneidkanten zur zerspanenden Materialbearbeitung über den Grundkörper hervorstehen.

Um eine schnelle Bearbeitung mit einer resultierenden möglichst hohen Oberflächengüte des zu bearbeitenden Werkstücks zu erreichen, können z.B. einige Schneideinsätze unter Ausbildung von Schruppschneiden an dem Grundkörper angeordnet werden und ein oder mehr Schneideinsätze können zur Ausbildung von Schlichtschneiden mit ihren in axialer Richtung vorstehenden Schneidkanten angeordnet werden. Insbesondere in Bezug auf die Schlichtschneiden bildenden Schneideinsätze ist es erforderlich, dass die in axialer Richtung hervorstehenden Schneidkanten der Schneideinsätze bezüglich ihrer axialen Position möglichst exakt ausgerichtet sind. Es ist wünschenswert, eine axiale Einstellmöglichkeit der axialen Position der Schlichtschneiden vorzusehen, wohingegen bei den als Schruppschneiden dienenden Schneideinsätzen eine derartige axiale Einstellbarkeit nicht erforderlich ist.

Bei der Anordnung von Schneideinsätzen an derartigen Fräswerkzeugen ist eine gute Kraftübertragung zwischen einem Grundkörper des Fräswerkzeugs und den Schneideinsätzen nötig. Ferner ist eine große Variabilität der Einsatzmöglichkeiten und eine möglichst geringe Anfälligkeit gegenüber Bedienungsfehlern durch einen Nutzer erwünscht, wobei gleichzeitig eine zuverlässige und sichere Fixierung der Schneideinsätze erforderlich ist.

FR 2 094 446 beschreibt ein Fräswerkzeug mit einer Mehrzahl von auswechselbaren Schneideinsätzen. In einer beschriebenen Ausgestaltung ist der Schneideinsatz in einem Klotz mit zwei Schenkeln aufgenommen und der Schneideinsatz stützt sich mit zwei Seitenflächen an den beiden Schenkeln ab. Zur Einstellung der Position des Schneideinsatzes ist einer der Schenkel auslenkbar ausgebildet und die Auslenkung kann über eine Schraube eingestellt werden.

Es ist Aufgabe der vorliegenden Erfindung, ein verbessertes Fräswerkzeug mit einer axialen Einstellbarkeit zumindest eines auswechselbaren Schneideinsatzes bereitzustellen, bei dem eine einfache Austauschbarkeit verschleißbeanspruchter Komponenten ermöglicht ist und eine zuverlässige und sichere Fixierung des Schneideinsatzes gegeben ist.

Die Aufgabe wird durch ein Fräswerkzeug nach Anspruch 1 gelöst. Vorteilhafte Weiterbildungen sind in den abhängigen Ansprüchen angegeben.

Durch die Ausgestaltung der Ausnehmung und der ersten Kassette derart, dass sich der erste Schneideinsatz mit seiner Unterseite unmittelbar an dem Grundkörper abstützt, wird eine zuverlässige Kraftübertragung von dem Grundkörper auf den ersten Schneideinsatz bereitgestellt und gleichzeitig kann die Breite der Ausnehmung in Umfangsrichtung niedrig gehalten werden. Durch das Vorsehen der Kassette können besonders verschleißbeanspruchte Komponenten des Fräswerkzeugs in einfacher Weise ausgetauscht und die Lebensdauer des Grundkörpers verlängert werden. Der Einstellmechanismus ermöglicht eine exakte Einstellung der axialen Position der Schneidkante des ersten Schneideinsatzes, was insbesondere in dem Fall, dass der erste Schneideinsatz als Schlichtschneide dient, besonders vorteilhaft ist. Durch die Realisierung der axialen Einstellbarkeit über einen auslenkbaren Arm der ersten Kassette ist eine besonders exakte Einstellung auch über einen großen Einstellbereich ermöglicht. Der auslenkbare Arm kann bevorzugt elastisch auslenkbar ausgestaltet sein. Er kann insbesondere einstückig mit dem Rest der Kassette ausgebildet sein. Das Fräswerkzeug kann insbesondere ein Planfräswerkzeug sein.

Gemäß einer Ausgestaltung ist die Spannvorrichtung zum formschlüssigen Zusammenwirken mit der Oberseite des ersten Schneideinsatzes ausgebildet. In diesem Fall ist eine zuverlässige und sichere Fixierung des ersten Schneideinsatzes in dem Fräswerkzeug bereitgestellt. Die Fixierung muss dabei nicht ausschließlich über Formschluss erfolgen, sondern sie kann gegebenenfalls auch zusätzlich kraftschlüssige Komponenten aufweisen.

Gemäß einer Ausgestaltung weist der Einstellmechanismus eine Einstellschraube mit einem konischen Abschnitt zum Auslenken des auslenkbaren Arms der ersten Kassette auf. In diesem Fall ist ein besonders einfacher und fein justierbarer Einstellmechanismus ermöglicht, der eine Verstellung über einen relativ weiten Bereich erlaubt. Die Einstellschraube kann bevorzugt mit zumindest einem Teil ihres Gewindeabschnitts in eine in der Kassette vorgesehene Gewindebohrung eingreifen.

Bevorzugt weist der Einstellmechanismus ein separat von der ersten Kassette ausgebildetes Einstellelement auf, das zum Verstellen in der axialen Richtung mit dem konischen Abschnitt der Einstellschraube zusammenwirkt. In diesem Fall ist eine Austauschbarkeit der am Stärksten verschleißbelasteten Komponenten des Einstellmechanismus gegeben und zudem kann die Materialpaarung dieser beiden Komponenten, d.h. der Einstellschraube und des Einstellelements unabhängig von dem Material der Kassette gewählt werden. Z.B. kann das Einstellelement aus einem härteren Material, als dem Material der Kassette, gebildet sein. Ferner kann die Stelle, an der die Krafteinleitung zur axialen Verstellung eingeleitet wird, unabhängig durch Anpassung des Einstellelements verändert werden.

Bevorzugt ist der erste Schneideinsatz derart in dem Fräswerkzeug festgelegt, dass nur eine uniaxiale Verstellung der Position des Schneideinsatzes in der axialen Richtung ermöglicht ist. In diesem Fall ist eine einfache und zuverlässige Konstruktion erreicht, bei der eine Einstellbarkeit nur in der Richtung gegeben ist, in der es für die Oberflächenqualität besonders relevant ist, und es wird eine exakte und zuverlässige Fixierung des ersten Schneideinsatzes in den anderen Richtungen erreicht.

Bevorzugt sind die Ausnehmung und die erste Kassette zur Aufnahme des ersten Schneideinsatzes derart, dass dieser auch in einer radialen Richtung über den Grundkörper hervorsteht, ausgebildet. Gemäß einer Ausgestaltung ist die Spannvorrichtung mit einer konvexen Oberfläche versehen, die dazu ausgebildet ist, mit einer konkaven Oberfläche der Oberseite des ersten Schneideinsatzes formschlüssig zusammenzuwirken, oder die Spannvorrichtung ist mit einer konkaven Oberfläche versehen, die dazu ausgebildet ist, mit einer konvexen Oberfläche der Oberseite des ersten Schneideinsatzes formschlüssig zusammenzuwirken. In diesem Fall ist die formschlüssige Fixierung des Schneideinsatzes in der Ausnehmung in besonders einfacher Weise und insbesondere bei einer axialen Verstellung über einen relativ breiten Bereich ermöglicht.

Bevorzugt ist die erste Kassette mit zumindest einer ersten Anlagefläche und zumindest einer zweiten Anlagefläche versehen, mit denen sich die erste Kassette an zumindest einer ersten Gegenfläche und zumindest einer zweiten Gegenfläche des Grundkörpers abstützt. In diesem Fall sind eine zuverlässige axiale und radiale Fixierung der Kassette an dem Grundkörper ermöglicht. Die erste Anlagefläche und die zweite Anlagefläche können dabei bevorzugt im Wesentlichen L-förmig zueinander verlaufen. Es ist insbesondere z.B. möglich, dass sich die erste Anlagefläche im Wesentlichen in axialer Richtung erstreckt und sich die zweite Anlagefläche im Wesentlichen in radialer Richtung erstreckt. Unter im Wesentlichen in radialer bzw. axialer Richtung wird dabei eine Ausrichtung verstanden die bis zu 30° von der radialen bzw. axialen Richtung abweicht.

Bevorzugt ist die erste Kassette unverschiebbar an dem Grundkörper festgelegt. In diesem Fall ist eine besonders zuverlässige und definierte Fixierung des ersten Schneideinsatzes ermöglicht. Die erste Kassette kann dabei insbesondere über Schraubverbindungen fest mit dem Grundkörper verschraubt sein. Bevorzugt ist die erste Kassette durch zumindest zwei Schrauben an dem Grundkörper befestigt, die die erste Kassette in axialer und radialer Richtung gegen den Grundkörper spannen. In diesem Fall kann die erste Kassette besonders zuverlässig in einer genau definierten Position und Ausrichtung an dem Grundkörper befestigt werden. Es ist zu beachten, dass die Achsen der Schrauben selbst nicht unbedingt in der axialen und der radialen Richtung verlaufen müssen, um die Verspannung in axialer und radialer Richtung zu erzielen.

Bevorzugt ist der Grundkörper mit einer Mehrzahl von Ausnehmungen zur Aufnahme von jeweiligen Schneideinsätzen und zugeordneten Kassetten versehen. Dabei können die Ausnehmungen bevorzugt im Wesentlichen gleich ausgebildet sein. In diesem Fall sind eine große Variabilität der Einsatzmöglichkeiten und eine geringe Anfälligkeit gegenüber Bedienungsfehlern durch einen Nutzer gegeben, da ein Nutzer bei einem Einbau von Kassetten und Schneideinsätzen keine möglichen Unterschiede zwischen verschiedenen Typen von Ausnehmungen beachten muss. Bevorzugt können die Ausnehmungen identisch ausgebildet sein.

Bevorzugt ist die erste Kassette derart ausgebildet, dass die in axialer Richtung hervorstehende Schneidkante des ersten Schneideinsatzes zumindest abschnittsweise im Wesentlichen senkrecht zu der Rotationsachse ausgerichtet ist. In diesem Fall kann der in axialer Richtung verstellbare erste Schneideinsatz vorteilhaft als Schlichtschneide zum Erzeugen einer Oberfläche eines zu bearbeitenden Werkstücks mit hoher Oberflächenqualität dienen.

Gemäß einer bevorzugten Ausgestaltung weist das Fräswerkzeug zumindest eine, in einer weiteren Ausnehmung lösbar befestigte, zweite Kassette auf zur Aufnahme eines weiteren, zu dem ersten Schneideinsatz identischen Schneideinsatzes derart, dass der weitere Schneideinsatz in axialer Richtung mit einer Schneidkante in einer von der Ausrichtung der Schneidkante des ersten Schneideinsatzes verschiedenen Ausrichtung hervorsteht. Insbesondere kann die Schneidkante des weiteren Schneideinsatzes unter einem anderen Winkel zu einer Ebene senkrecht zu der Rotationsachse des Fräswerkzeugs verlaufen, als die Schneidkante des ersten Schneideinsatzes. In diesem Fall kann insbesondere der erste Schneideinsatz zur Schlichtbearbeitung zum Einsatz kommen und der weitere Schneideinsatz zur gleichzeitigen Schruppbearbeitung, sodass in einem Arbeitsgang in effizienter Weise eine hohe Oberflächenqualität des zu bearbeitenden Werkstücks erzielt werden kann. Da der weitere Schneideinsatz identisch zu dem ersten Schneideinsatz ausgebildet ist, ist eine besonders einfache Handhabung ermöglicht und das Risiko von Problemen aufgrund von Benutzungsfehlern ist minimiert. Die zweite Kassette kann insbesondere ohne Einstellmechanismus ausgebildet sein, ansonsten aber dieselben Merkmale aufweisen, die in Bezug auf die erste Kassette beschrieben wurden.

Es können insbesondere eine Mehrzahl von ersten Kassetten und zugeordneten ersten Schneideinsätzen und/oder eine Mehrzahl von zweiten Kassetten und zugeordneten weiteren Schneideinsätzen vorgesehen sein. Bevorzugt weist der Grundkörper eine Mehrzahl von Ausnehmungen zur Aufnahme von Kassetten und Schneideinsätzen auf, die jeweils sowohl die ersten Kassetten und ersten Schneideinsätze als auch die zweiten Kassetten und weiteren Schneideinsätze aufnehmen können. In diesem Fall ist eine besonders große Variabilität in der Anwendung ermöglicht und ein Risiko von Benutzungsfehlern ist minimiert.

Bevorzugt ist die zweite Kassette derart ausgebildet, dass die in axialer Richtung hervorstehende Schneidkante des weiteren Schneideinsatzes unter einem Winkel größer 5°, bevorzugt größer 7° relativ zu einer Ebene verläuft, die senkrecht zu der Rotationsachse verläuft. In diesem Fall kann der weitere Schneideinsatz besonders effizient als Schruppschneide eingesetzt werden. Insbesondere kann die hervorstehende Schneidkante unter einem Winkel von etwa 10° relativ zu der Ebene verlaufen. Der Winkel kann jedoch auch deutlich größer sein, insbesondere bis zu 30° betragen.

Weitere Vorteile und Zweckmäßigkeiten der Erfindung ergeben sich anhand der nachfolgenden Beschreibung von Ausführungsbeispielen unter Bezugnahme auf die beigefügten Figuren.

Von den Figuren zeigen:
- Fig. 1:: eine perspektivische Ansicht eines Fräswerkzeugs gemäß einer Ausführungsform;
- Fig. 2:: eine Detailansicht eines Bereichs des Fräswerkzeugs von Fig. 1;
- Fig. 3:: eine Detailansicht einer Ausnehmung in dem Grundkörper des Fräswerkzeugs mit einer ersten Kassette und einem ersten Schneideinsatz;
- Fig. 4:: eine perspektivische Ansicht der ersten Kassette mit dem ersten Schneideinsatz;
- Fig. 5:: eine Seitenansicht der ersten Kassette mit dem ersten Schneideinsatz;
- Fig. 6:: einen Schnitt entlang der Linie L-L in Fig. 5;
- Fig. 7:: eine Aufsicht auf die erste Kassette mit dem ersten Schneideinsatz;
- Fig. 8:: einen Schnitt entlang der Linie M-M in Fig. 7;
- Fig. 9:: eine perspektivische Ansicht eines Einstellelements und einer Einstellschraube;
- Fig. 10:: eine Aufsicht auf das Einstellelement und die Einstellschraube;
- Fig. 11:: einen Schnitt entlang der Linie S-S in Fig. 10;
- Fig. 12:: eine Seitenansicht einer zweiten Kassette mit einem weiteren Schneideinsatz;
- Fig. 13:: einen Schnitt entlang der Linie N-N in Fig. 12;
- Fig. 14:: eine Aufsicht auf die zweite Kassette mit dem weiteren Schneideinsatz; und
- Fig. 15:: einen Schnitt entlang der Linie P-P in Fig. 14.

### AUSFÜHRUNGSFORM

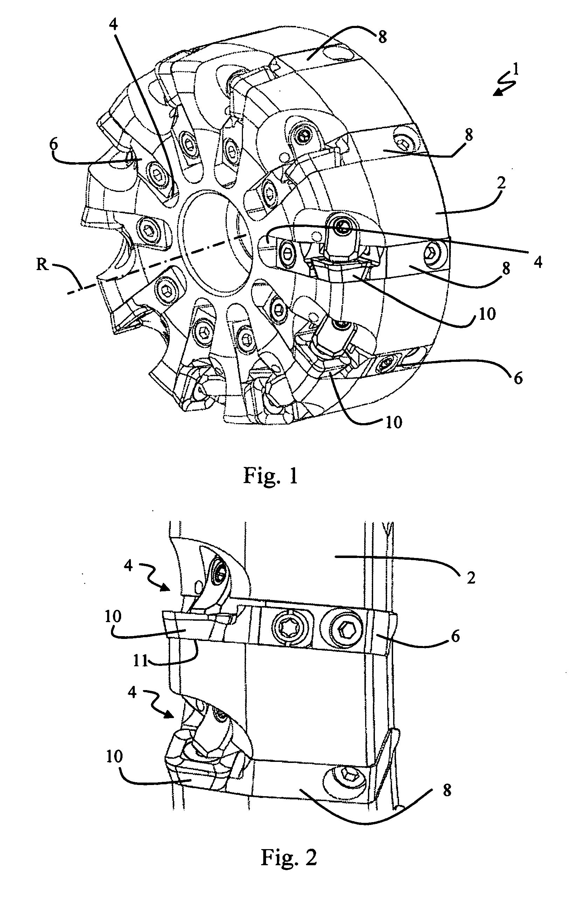

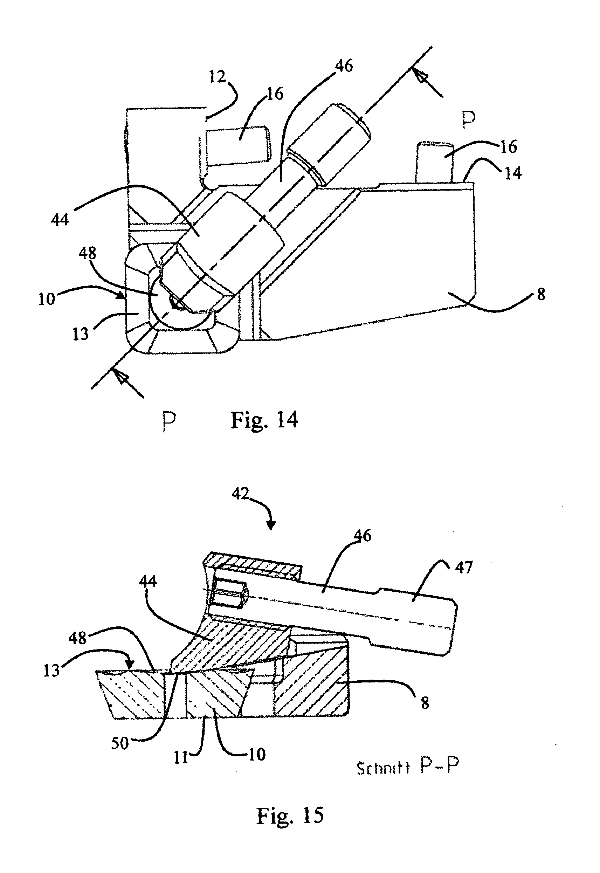

Im Folgenden wird eine Ausführungsform unter Bezug auf die Fig. 1 bis Fig. 15 beschrieben.

Fig. 1 ist eine perspektivische Darstellung eines Fräswerkzeugs -1- gemäß der Ausführungsform. Bei der Ausführungsform ist das Fräswerkzeug -1- als ein Planfräser ausgebildet, der insbesondere zur gleichzeitigen Schrupp- und Schlichtbearbeitung in einem Bearbeitungsschritt ausgestaltet ist. Das Fräswerkzeug -1- weist einen Grundkörper -2- auf, der dazu ausgebildet ist, mit einem um eine Rotationsachse -R- rotierenden Antrieb einer Fräsmaschine verbunden zu werden.

Der Grundkörper -2- ist umfangsseitig mit einer Mehrzahl von Ausnehmungen -4- zur Aufnahme von Kassetten und Schneideinsätzen ausgebildet. Bei dem in Fig. 1 dargestellten Ausführungsbeispiel ist der Grundkörper -2- beispielhaft mit zehn Ausnehmungen -4- versehen. Die Ausnehmungen -4- sind bei dem Ausführungsbeispiel alle identisch zueinander ausgebildet und in Umfangsrichtung in regelmäßigen Abständen angeordnet. Obwohl bei dem Ausführungsbeispiel zehn Ausnehmungen -4- vorgesehen sind, ist es z.B. auch möglich, mehr Ausnehmungen -4- vorzusehen oder weniger Ausnehmungen -4- vorzusehen.

Wie in Fig. 1 und der Detaildarstellung von Fig. 2 zu erkennen ist, ist ein Teil der Ausnehmungen -4- jeweils mit einer ersten Kassette -6- bestückt und ein Teil der Ausnehmungen -4- ist jeweils mit einer zweiten Kassette -8- bestückt, wie im Folgenden noch eingehender beschrieben wird. Bei dem dargestellten Ausführungsbeispiel sind z.B. zwei einander gegenüberliegende Ausnehmungen -4- jeweils mit einer ersten Kassette -6- versehen und die restlichen Ausnehmungen -4- sind jeweils mit einer zweiten Kassette -8-versehen. Es ist zu beachten, dass die Ausführungsform nicht auf diese Anordnung und dieses Verhältnis von ersten Kassetten -6- zu zweiten Kassetten -8- beschränkt ist. Insbesondere kann durch die identische Ausgestaltung der Ausnehmungen -4- jede Ausnehmung -4- wahlweise mit einer ersten Kassette -6- oder einer zweiten Kassette -8- versehen werden, was ein hohes Maß an Variabilität ergibt.

Die ersten Kassetten -6- sind mit ersten Schneideinsätzen -10- versehen und die zweiten Kassetten -8- sind mit weiteren Schneideinsätzen -10- versehen. Dabei sind die ersten Schneideinsätze -10-, die in den ersten Kassetten -6-angeordnet sind, identisch zu den weiteren Schneideinsätzen -10- ausgebildet, die in den zweiten Kassetten -8- angeordnet sind. Allerdings ist die Ausrichtung der in den ersten Kassetten -6- angeordneten Schneideinsätze -10-verschieden von der Ausrichtung der in den zweiten Kassetten -8-angeordneten Schneideinsätze -10-, wie nachfolgend noch eingehender beschrieben wird. Die Schneideinsätze -10- sind bei der Ausführungsform als Wendeschneidplatten ausgebildet, die eine Mehrzahl von unabhängig voneinander einsetzbaren Schneidkantenabschnitten aufweisen. Bei dem dargestellten Ausführungsbeispiel sind die Schneideinsätze -10- insbesondere als vierfach indexierbare einseitige Wendeschneidplatten ausgebildet, wobei die Ausführungsform jedoch nicht auf diese Realisierung beschränkt ist.

Im Folgenden werden zunächst unter Bezug auf die Fig. 2 bis Fig. 11 die ersten Kassetten -6- und die Anordnung der ersten Schneideinsätze -10- in diesen eingehender beschrieben.

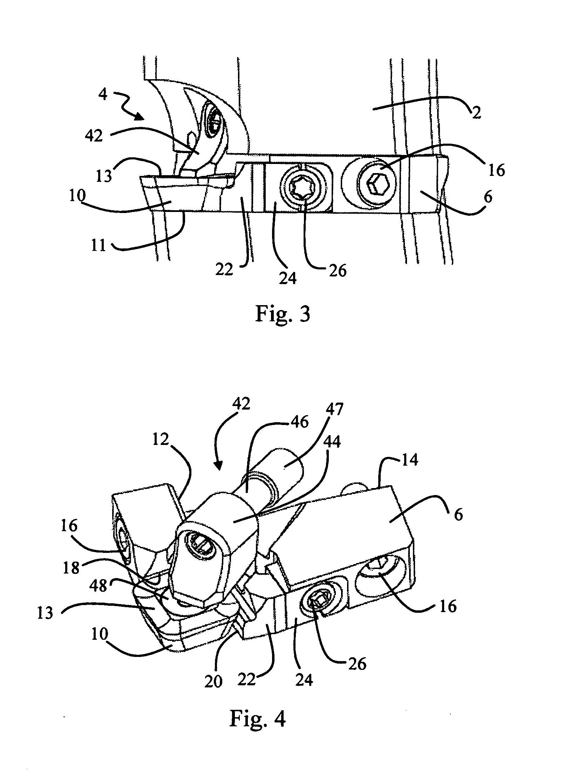

Die erste Kassette -6- ist dazu ausgebildet, einen ersten Schneideinsatz -10-aufzunehmen, dessen in axialer Richtung hervorstehende Schneidkante im Betrieb des Fräswerkzeugs -1- als Schlichtschneide zum Erzeugen einer hohen Oberflächengüte dient. Die erste Kassette -6- weist einen einstückig ausgebildeten Kassettenkörper auf, der eine L-förmige Form aufweist, wie insbesondere in den Fig. 4, Fig. 6 und Fig. 7 zu erkennen ist. Der Kassettenkörper ist dabei derart an die Ausnehmung -4- in dem

Grundkörper -2- des Fräswerkzeugs -1- angepasst, dass die erste Kassette -6-im Wesentlichen vollständig in der Ausnehmung -4- aufgenommen ist, wie insbesondere in Fig. 1 und Fig. 2 zu erkennen ist.

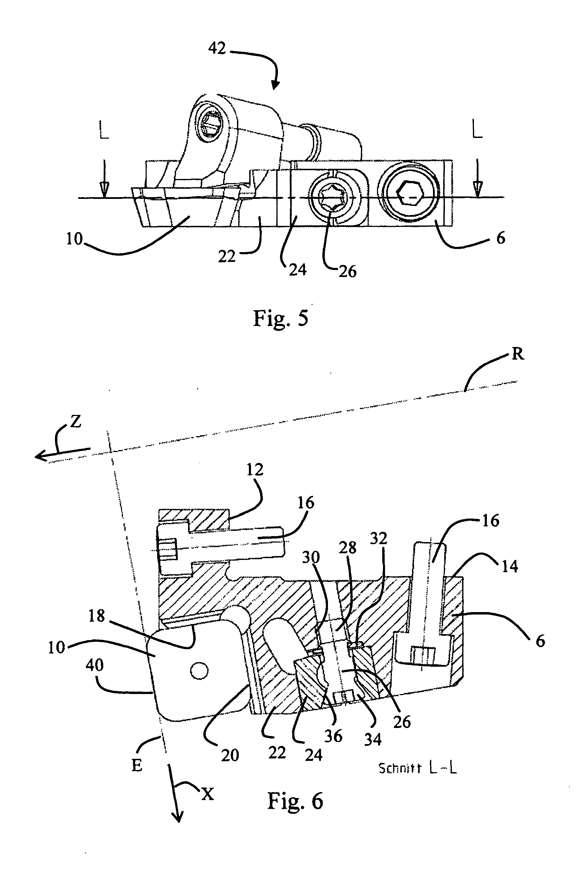

Die erste Kassette -6- weist eine erste Anlagefläche -12- auf, die sich im Wesentlichen senkrecht zu der Rotationsachse -R- erstreckt, wie z.B. in Fig. 6 zu erkennen ist. Bei dem dargestellten Ausführungsbeispiel erstreckt sich die erste Anlagefläche -12- z.B. in einem Winkel von 80° zu der Rotationsachse -R-. Die erste Kassette -6- weist ferner eine zweite Anlagefläche -14- auf, die sich zumindest im Wesentlichen senkrecht zu der ersten Anlagefläche -12- erstreckt. Bei dem dargestellten Ausführungsbeispiel erstreckt sich die zweite Anlagefläche -14- z.B. unter einem Winkel von etwa 10° relativ zu der Rotationsachse -R-. Die erste Kassette -6- und die Ausnehmung -4- in dem Grundkörper -2- sind derart angepasst, dass sich die erste Kassette -6- mit der ersten Anlagefläche -12- an einer ersten Gegenfläche des Grundkörpers -2- abstützt und mit der zweiten Anlagefläche -14- an einer zweiten Gegenfläche des Grundkörpers -2- abstützt.

Bei der dargestellten Ausführungsform sind ferner zwei Schrauben -16-vorgesehen, mit denen die erste Kassette -6- unverschiebbar an dem Grundkörper -2- festlegbar ist. Eine der beiden Schrauben -16- ist durch eine Bohrung in dem kurzen Schenkel des L-förmigen Kassettenkörpers geführt, die die erste Anlagefläche -12- durchdringt. Der Gewindeabschnitt dieser Schraube -16- ist dazu angepasst, in eine entsprechende (nicht dargestellte) Gewindebohrung im Bereich der ersten Gegenfläche des Grundkörpers -2-einzugreifen. Die andere Schraube -16- ist durch eine Bohrung in dem langen Schenkel des L-förmigen Kassettenkörpers geführt, die die zweite Anlagefläche -14- durchdringt. Der Gewindeabschnitt dieser anderen Schraube -16- ist dazu angepasst, in eine entsprechende (nicht dargestellte) Gewindebohrung im Bereich der zweiten Gegenfläche des Grundkörpers -2-einzugreifen. Wie insbesondere in den Fig. 4, Fig. 6 und Fig. 7 zu sehen ist, verlaufen die Schrauben -16- zudem schräg zu sowohl der Rotationsachse -Rund einer Ebene -E- senkrecht zu dieser als auch zu der ersten Anlagefläche -12- und der zweiten Anlagefläche -14-. Durch Anziehen der Schrauben -16- wird die erste Kassette -6- in axialer und radialer Richtung gegen den Grundkörper -2- gespannt und in vordefinierter Ausrichtung und Position an diesem festgelegt.

Die erste Kassette -6- ist mit einer ersten Gegenlagerfläche -18- versehen, die die Position und Ausrichtung einer Seitenfläche des ersten Schneideinsatzes -10- festlegt. Die erste Kassette -6- ist ferner mit einer zweiten Gegenlagerfläche -20- versehen, die die Position und Ausrichtung einer weiteren Seitenfläche des ersten Schneideinsatzes -10- festlegt. Die erste Gegenlagerfläche -18- und die zweite Gegenlagerfläche -20- bilden eine Art Tasche, die zwei Seitenflächen des ersten Schneideinsatzes -10- festlegt. Bei dem dargestellten Ausführungsbeispiel verlaufen die erste Gegenlagerfläche -18- und die zweite Gegenlagerfläche -20- z.B. zumindest im Wesentlichen senkrecht zueinander und bilden eine axiale und eine radiale Festlegung der Position des ersten Schneideinsatzes -10-. Wie in Fig. 6 zu sehen ist, erstreckt sich die erste Gegenlagerfläche -18- bei dem Ausführungsbeispiel parallel zu der Rotationsachse -R- und die zweite Gegenlagerfläche -20- erstreckt sich senkrecht zu der Rotationsachse -R-, d.h. parallel zu einer Ebene -E-, die sich senkrecht zu der Rotationsachse -R-erstreckt.

Die zweite Gegenlagerfläche -20- ist an einem auslenkbaren Arm -22- der ersten Kassette -6- ausgebildet, sodass der auslenkbare Arm -22- als Gegenlager für eine Seitenfläche des ersten Schneideinsatzes -10- dient. Bei der Ausführungsform ist der auslenkbare Arm -22- derart einstückig mit dem Kassettenkörper ausgebildet, dass er elastisch auslenkbar ist.

In einer Ausnehmung in der ersten Kassette -6- ist ein Einstellelement -24-angeordnet, das mit einer Fläche gegen die von der zweiten Gegenlagerfläche -20- abgewandte Rückseite des auslenkbaren Arms -22-gelagert ist, wie insbesondere in Fig. 4 und Fig. 6 zu sehen ist. Das Einstellelement -24- ist mit einer Bohrung versehen, durch die eine Einstellschraube -26- geführt ist, die mit einem Gewindeabschnitt -28- in eine entsprechende Gewindebohrung -30- eingreifen kann, die in der ersten

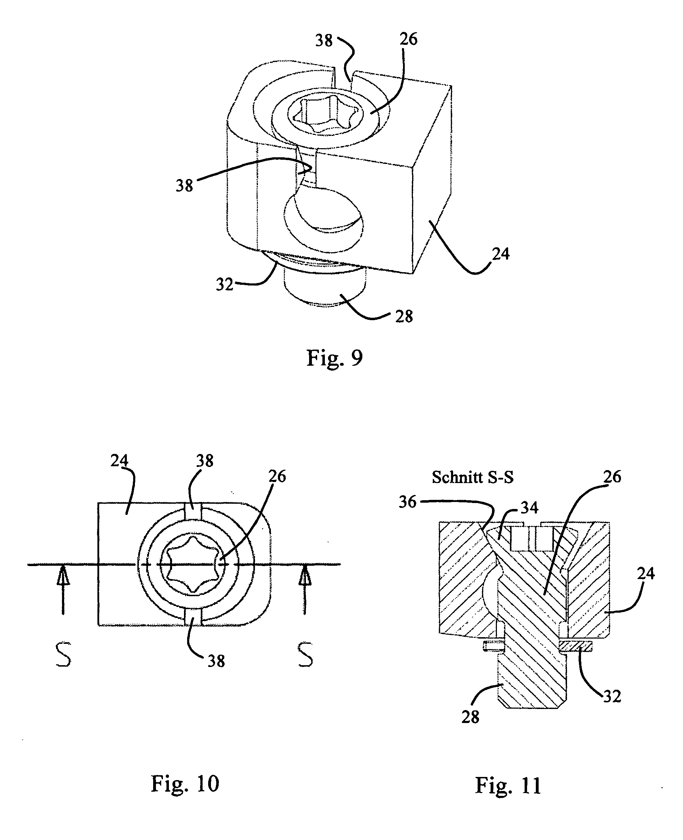

Kassette -6- vorgesehen ist, wie in Fig. 6 zu sehen ist. Wie insbesondere in den Fig. 9 bis Fig. 11 zu sehen ist, ist die Einstellschraube -26- angrenzend an den Gewindeabschnitt -28- mit einem verjüngten Durchmesser versehen. Im Bereich des verjüngten Durchmessers ist eine den verjüngten Durchmesser ringförmig umgreifende geschlitzte Verliersicherung -32- vorgesehen, die ein Herausfallen der Einstellschraube -26- aus dem Einstellelement -24- verhindert, wenn der Gewindeabschnitt -28- nicht in die Gewindebohrung -30- eingreift.

Wie insbesondere in den Fig. 6 und Fig. 11 zu sehen ist, ist die Einstellschraube -26- im Bereich ihres Kopfes an der Außenseite mit einem konischen Abschnitt -34- versehen, der mit einer entsprechenden Gegenfläche -36- in der Bohrung des Einstellelements -24- zusammenwirkt. Das Einstellelement -24- ist derart ausgestaltet, dass dessen Außendurchmesser in dem Bereich, in dem sich der Kopf der Einstellschraube -26- befindet, aufweitbar ist. Bei dem dargestellten Ausführungsbeispiel ist dies durch einen Schlitz -38- erreicht, der das Einstellelement -24- durchdringt, wie in den Fig. 9 und Fig. 10 zu sehen ist. Bei einem Einschrauben der Einstellschraube -26- in die Gewindebohrung -30-drückt der konische Abschnitt -34- gegen die Gegenfläche -36- in der Bohrung des Einstellelements -24-, sodass dessen Außendurchmesser aufgeweitet wird. Durch dieses Aufweiten drückt das Einstellelement -24- gegen den auslenkbaren Arm -22- sodass dieser ausgelenkt wird.

Die Einstellschraube -26-, das Einstellelement -24- und der auslenkbare Arm -22- der ersten Kassette -6- bilden zusammen einen Einstellmechanismus, der eine Einstellung der axialen Position des ersten Schneideinsatzes -10-ermöglicht, wie im Folgenden noch eingehender beschrieben wird.

Die Anordnung des ersten Schneideinsatzes -10- in der Ausnehmung -4- wird nun eingehender beschrieben. Der erste Schneideinsatz -10- stützt sich mit seiner Unterseite -11- unmittelbar an dem Grundkörper -2- ab, wie in den Fig. 1 bis Fig. 3 zu sehen ist. In dieser Weise ist eine Befestigung des ersten Schneideinsatzes -10- erzielt, die in Umfangsrichtung einen geringen Platzbedarf aufweist. Eine Seitenfläche des ersten Schneideinsatzes -10- stützt sich an der ersten Gegenlagerfläche -18- derart ab, dass diese die Positionierung des ersten Schneideinsatzes -10- in der radialen Richtung -X-bestimmt. Eine weitere Seitenfläche des ersten Schneideinsatzes -10- stützt sich an der zweiten Gegenlagerfläche -20- derart ab, dass diese die Positionierung des ersten Schneideinsatzes -10- in der axialen Richtung -Z-bestimmt.

Wie in Fig. 6 zu sehen ist, verläuft eine in axialer Richtung -Z- über den Grundkörper -2- hervorstehende Schneidkante -40- des ersten Schneideinsatzes -10- zumindest im Wesentlichen parallel zu einer Ebene -E-, die sich senkrecht zu der Rotationsachse -Z- erstreckt. Es ist dabei möglich, dass sich die Schneidkante -40- nicht exakt senkrecht zu der Rotationsachse -Z- erstreckt oder, je nach Ausgestaltung des Schneidkantenverlaufs, nur in einem Teilbereich senkrecht zu der Rotationsachse -Z- (d.h. in der Ebene -E-) erstreckt. Aufgrund dieser Ausrichtung dient die Schneidkante -40- bei einem Betrieb des Fräswerkzeugs -1- als Schlichtschneide zur Erzielung einer hohen Oberflächengüte des zu bearbeitenden Werkstücks. Mit dem Einstellmechanismus, der durch den auslenkbaren Arm -22-, das Einstellelement -24- und die Einstellschraube -26- gebildet ist, ist die axiale Position der Schneidkante -40- exakt einstellbar.

Durch das Zusammenwirken der Einstellschraube -26- mit dem Einstellelement -24- zur Einstellung der axialen Position des ersten Schneideinsatzes -10- ist auch unter Berücksichtigung von Fertigungstoleranzen eine exakte Einstellung der axialen Position über einen relativ breiten Bereich sehr genau ermöglicht. Aufgrund der separaten Ausgestaltung des Einstellelements -24- kann dieses vorteilhaft aus einem Material gefertigt werden, dass eine höhere Verschleißbeständigkeit aufweist, als das Material der ersten Kassette -6-. Ferner kann durch diese Ausgestaltung unabhängig der Bereich bzw. Punkt eingestellt werden, an dem die Krafteinleitung von der Einstellschraube -26- über das Einstellelement -24-auf den auslenkbaren Arm -22- erfolgt. Ohne eine Veränderung der Ausgestaltung der ersten Kassette -6- und insbesondere des auslenkbaren Arms -22- können der Einstellbereich und die Feinjustierbarkeit der axialen Einstellung in einfacher Weise durch eine Veränderung der Neigung des konischen Abschnitts -34- der Einstellschraube -26- und/oder der Gegenfläche -36- in der Bohrung in dem Einstellelement -24- angepasst werden. Bei gegebener Gewindeausgestaltung der Einstellschraube -26- und der korrespondierenden Gewindebohrung -30- können der axiale Einstellbereich und die Verstellung pro Schraubenumdrehung der Einstellschraube -26- über eine Veränderung des Winkels des konischen Abschnitts -34- relativ zu der Schraubenachse der Einstellschraube -26-verändert werden.

Im Folgenden wird die Fixierung des ersten Schneideinsatzes -10- in der Ausnehmung -4- eingehender beschrieben. Wie in den Fig. 1 bis Fig. 5, Fig. 7 und Fig. 8 zu sehen ist, ist eine Spannvorrichtung -42- zum Fixieren des ersten Schneideinsatzes -10- in der Ausnehmung -4- vorgesehen. Die Spannvorrichtung -42- ist bei dem dargestellten Ausführungsbeispiel als eine Spannpratze realisiert und weist einen Halteabschnitt -44- und eine Fixierschraube -46- auf. Die Spannvorrichtung -42-, insbesondere der Halteabschnitt -44-, ist dazu ausgebildet, formschlüssig mit der Oberseite -13-des ersten Schneideinsatzes -10- zusammenzuwirken. Die Fixierschraube -46-weist einen Gewindeabschnitt -47- auf, der dazu ausgebildet ist, in eine korrespondierende Gewindebohrung (nicht dargestellt) einzugreifen, die in dem Grundkörper -2- vorgesehen ist.

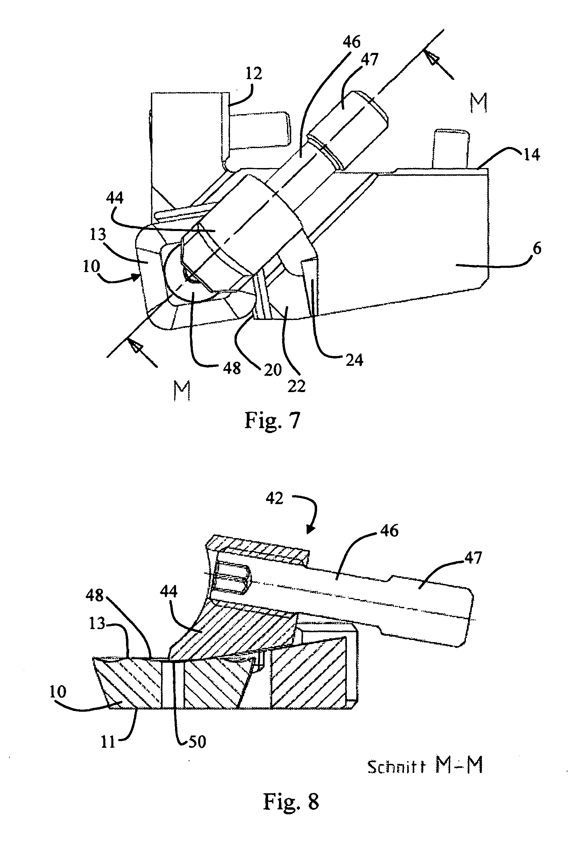

Die Oberseite -13- des Schneideinsatzes -10- ist bei der dargestellten Ausführungsform mit einer konkaven Oberfläche -48- versehen. Wie insbesondere in Fig. 8 zu sehen ist, ist die Spannvorrichtung -42- mit einer konvexen Oberfläche -50- versehen, die derart ausgestaltet ist, dass sie mit der konkaven Oberfläche -48- der Oberseite -13- des ersten Schneideinsatzes -10-formschlüssig zusammenwirkt. Die konkave Ausgestaltung der Oberseite -13- und die konvexe Ausgestaltung der Oberfläche -50- der Spannvorrichtung -42-sind derart gewählt, dass ein formschlüssiges Zusammenwirken zwischen der Spannvorrichtung -42- und dem ersten Schneideinsatz -10- über den gesamten Bereich der Einstellbarkeit der axialen Position des ersten Schneideinsatzes -10- ermöglicht ist. Obwohl die konkave Ausgestaltung der Oberseite -13- des Schneideinsatzes -10- und die konvexe Ausgestaltung der Spannvorrichtung -42-, insbesondere des Halteabschnitts -44-, bevorzugt ist, ist auch eine umgekehrte Ausgestaltung möglich, bei der die Oberseite -13- des Schneideinsatzes -10- konvex ausgestaltet ist und die korrespondierende Oberfläche der Spannvorrichtung -42- konkav.

Die konkave Oberfläche -48- der Oberseite -13- des ersten Schneideinsatzes -10- ist bei dem Ausführungsbeispiel ferner derart ausgebildet, dass diese bezüglich einer Symmetrieachse, die sich senkrecht zu der Unterseite -11- des ersten Schneideinsatzes -10- erstreckt, rotationssymmetrisch ausgebildet ist. Diese Ausgestaltung ermöglicht eine sichere Befestigung desselben Schneideinsatzes -10- mit formschlüssigen Anteilen der Befestigung sowohl in einer ersten Ausrichtung in der ersten Kassette -6- als auch in einer zweiten Ausrichtung in der zweiten Kassette -8-, die im Folgenden noch eingehender erläutert wird.

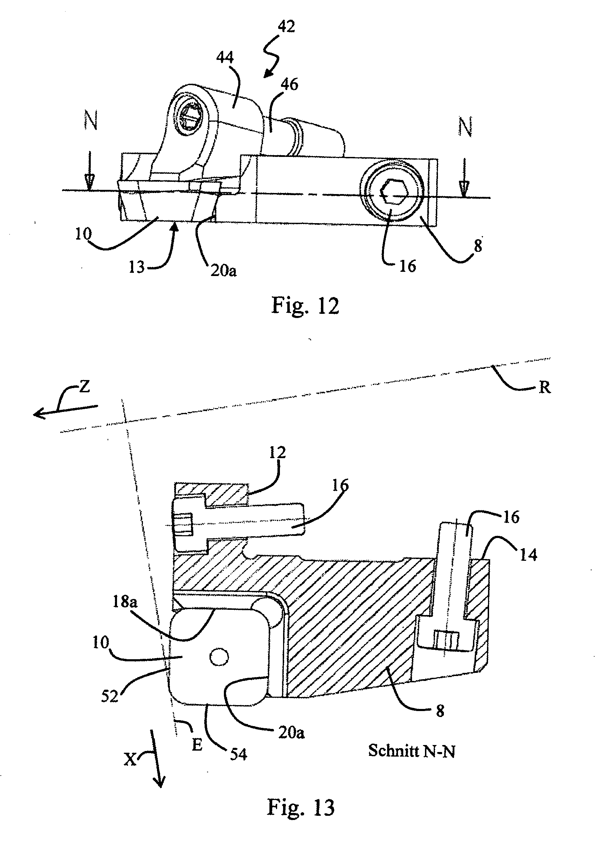

Im Folgenden werden unter Bezug auf die Fig. 12 bis Fig. 15 die zweiten Kassetten -8- und die Anordnung der weiteren Schneideinsätze -10- in diesen eingehender beschrieben.

Wie in den Fig. 12 bis Fig. 15 zu sehen ist, weist die zweite Kassette -8- ebenso wie die erste Kassette -6- einen im Wesentlichen L-förmigen Kassettenkörper auf, der gleichermaßen wie die erste Kassette -6- mit einer ersten Anlagefläche -12- und einer zweiten Anlagefläche -14- derart versehen ist, dass dieser über Schrauben -16- in denselben Ausnehmungen -4- an dem Grundkörper -2- befestigbar ist.

Die zweite Kassette -8- unterscheidet sich von der ersten Kassette -6- darin, dass kein Einstellmechanismus zum Einstellen der axialen Position des Schneideinsatzes -10- vorgesehen ist und eine andere Ausrichtung des Schneideinsatzes -10- bezüglich der axialen Richtung -Z- und der radialen Richtung -X- gegeben ist. Die Befestigung der zweiten Kassette -8- in der Ausnehmung -4- erfolgt in gleicher Weise, wie es oben in Bezug auf die erste Kassette -6- beschrieben wurde. Die Befestigung des Schneideinsatzes -10- in der Ausnehmung -4- erfolgt ebenfalls, wie in Bezug auf die erste Kassette -6-beschrieben, derart, dass sich der Schneideinsatz -10- mit seiner Rückseite -11- unmittelbar an dem Grundkörper -2- abstützt und eine Fixierung mittels der gleichen Spannvorrichtung -42- erfolgt.

Anstelle der ersten Gegenlagerfläche -18- und der zweiten Gegenlagerfläche -20- sind bei der zweiten Kassette -8- eine erste Gegenlagerfläche -18a- und eine zweite Gegenlagerfläche -20a- vorgesehen. Die erste Gegenlagerfläche -18a- legt die Position und Ausrichtung einer Seitenfläche des Schneideinsatzes -10- fest und die zweite Gegenlagerfläche -20a- legt die Position und Ausrichtung einer weiteren Seitenfläche des Schneideinsatzes -10- fest. Wie bei der ersten Kassette -6-, bilden bei der zweiten Kassette -8- die erste Gegenlagerfläche -18a- und die zweite Gegenlagerfläche -20a- eine Art Tasche, die zwei Seitenflächen des Schneideinsatzes -10- festlegt. Bei dem dargestellten Ausführungsbeispiel verlaufen die erste Gegenlagerfläche -18a- und die zweite Gegenlagerfläche -20a- z.B. zumindest im Wesentlichen senkrecht zueinander und bilden eine axiale und eine radiale Festlegung der Position des Schneideinsatzes -10-. Wie in Fig. 13 zu sehen ist, erstreckt sich die erste Gegenlagerfläche -18a- bei dem Ausführungsbeispiel unter einem Winkel von 10° zu der Rotationsachse -R- und die zweite Gegenlagerfläche -20a- erstreckt sich unter einem Winkel von 10° zu einer Ebene -E-, die sich senkrecht zu der Rotationsachse -R- erstreckt.

Wie in Fig. 13 zu sehen ist, verläuft eine in axialer Richtung -Z- über den Grundkörper -2- hervorstehende Schneidkante -52- des durch die zweite Kassette -8- gehaltenen Schneideinsatzes -10- bei dem Ausführungsbeispiel unter einem Winkel von etwa 10° relativ zu der Ebene -E-, die sich senkrecht zu der Rotationsrichtung -R- erstreckt. Eine in der radialen Richtung -X- über den Grundkörper -2- hervorstehende Schneidkante -54- des Schneideinsatzes -10-verläuft unter einem Winkel von etwa 10° relativ zu der Rotationsrichtung -Rund bildet somit bei einem Betrieb des Fräswerkzeugs -1- als Planfräser eine Schruppschneide. Durch die beschriebene Ausgestaltung der Oberseite -13-des Schneideinsatzes -10- ist auch bei der von der ersten Kassette -6-verschiedenen Ausrichtung des Schneideinsatzes -10- in der zweiten Kassette -8- in gleicher Weise eine zuverlässige Fixierung unter formschlüssigem Zusammenwirken zwischen der konkaven Oberfläche -48- der Oberseite -13- und der konvexen Oberfläche -50- der Spannvorrichtung -42-gegeben.

Durch die unterschiedliche Ausrichtung des in der ersten Kassette -6-aufgenommenen Schneideinsatzes -10- und des in der zweiten Kassette -8-aufgenommenen Schneideinsatzes -10- ist eine gleichzeitige Schrupp- und Schlichtbearbeitung in einem Arbeitsgang ermöglicht, wobei durch den Einsatz identischer Aufnahmen -4- und identischer Schneideinsätze -10- ein hohes Maß an Variabilität bei gleichzeitig geringer Anfälligkeit gegenüber Benutzerfehlern gegeben ist.

Mit der beschriebenen Ausgestaltung sind sowohl die erste Kassette -6- als auch die zweite Kassette -8- an dem Grundkörper -2- eindeutig festgelegt und es erfolgt eine sehr direkte Einleitung der Schnittkraft bei der Zerspanung. Die Einstellung der axialen Position des Schneideinsatzes -10- in der ersten Kassette -6- erfolgt aufgrund der Ausgestaltung im Wesentlichen frei von Spiel. Die Einleitung der Schnittkraft in den Grundkörper -2- ist aufgrund des beschriebenen Einstellmechanismus im Wesentlichen von der Einstellung der axialen Position des Schneideinsatzes -10- entkoppelt. Somit besteht nicht die Gefahr einer Veränderung der axialen Position aufgrund von auf den Einstellmechanismus einwirkenden Schnittkräften. Durch die Kombination der Einstellschraube -26- und des Einstellelements -24- ist auch bei toleranzbehafteten Bauteilen eine sehr feine Einstellung der axialen Position ermöglicht.

Durch das Vorsehen des Einstellmechanismus, der eine Einstellung über einen großen Bereich ermöglicht, können die verwendeten Schneideinsätze -10-insbesondere auch nachgeschliffen werden, was zu einer Reduzierung des Durchmessers des Innenkreises der Schneideinsätze -10- führt, und es kann trotzdem die gewünschte exakte Ausrichtung erreicht werden. Dies ist insbesondere im Fall von PKD-Schneideinsätzen (polykristalliner Diamant) oder CBN-Schneideinsätzen (cubisches Bornitrid) von Vorteil.

## Patentansprüche

1. Fräswerkzeug mit:
einem Grundkörper (2), der eine vorgegebene Rotationsachse (R) und zumindest eine Ausnehmung (4) zur Aufnahme eines auswechselbaren ersten Schneideinsatzes (10) derart, dass der erste Schneideinsatz (10) in axialer Richtung (Z) mit einer Schneidkante (40) über den Grundkörper (2) hervorsteht, aufweist,
einem Einstellmechanismus (26, 24, 22) zur Verstellung der Position des ersten Schneideinsatzes (10) in der axialen Richtung (Z), und
einer Spannvorrichtung (42) zum Fixieren des ersten Schneideinsatzes (10) in der Ausnehmung (4),
wobei der Einstellmechanismus (26, 24, 22) einen auslenkbaren Arm (22) aufweist, der als Gegenlager für zumindest eine Seitenfläche des ersten Schneideinsatzes (10) ausgebildet ist,
**dadurch gekennzeichnet, dass** sich der erste Schneideinsatz (10) mit seiner Unterseite unmittelbar an dem Grundkörper (2) abstützt und
das Fräswerkzeug eine in der Ausnehmung (4) lösbar befestigte erste Kassette (6), die den auslenkbaren Arm (22) aufweist, zur Festlegung von zumindest zwei Seitenflächen des ersten Schneideinsatzes (10) aufweist.

2. Fräswerkzeug nach Anspruch 1, **dadurch gekennzeichnet, dass** die Spannvorrichtung (42) zum formschlüssigen Zusammenwirken mit der Oberseite (13) des ersten Schneideinsatzes (10) ausgebildet ist.

3. Fräswerkzeug nach Anspruch 1 oder 2, **dadurch gekennzeichnet, dass** der Einstellmechanismus (26, 24, 22) eine Einstellschraube (26) mit einem konischen Abschnitt (34) zum Auslenken des auslenkbaren Arms (22) der ersten Kassette (6) aufweist.

4. Fräswerkzeug nach Anspruch 3, **dadurch gekennzeichnet, dass** der Einstellmechanismus (26, 24, 22) ein separat von der ersten Kassette (6) ausgebildetes Einstellelement (24) aufweist, das zum Verstellen in der axialen Richtung (Z) mit dem konischen Abschnitt (34) der Einstellschraube (26) zusammenwirkt.

5. Fräswerkzeug nach einem der vorangehenden Ansprüche, **dadurch gekennzeichnet, dass** der erste Schneideinsatz (10) derart in dem Fräswerkzeug festgelegt ist, dass nur eine uniaxiale Verstellung der Position des Schneideinsatzes (10) in der axialen Richtung (Z) ermöglicht ist.

6. Fräswerkzeug nach einem der vorangehenden Ansprüche, **dadurch gekennzeichnet, dass** die Ausnehmung (4) und die erste Kassette (6) zur Aufnahme des ersten Schneideinsatzes (10) derart, dass dieser auch in einer radialen Richtung (X) über den Grundkörper (2) hervorsteht, ausgebildet sind.

7. Fräswerkzeug nach einem der vorangehenden Ansprüche, **dadurch gekennzeichnet, dass** die Spannvorrichtung (42) mit einer konvexen Oberfläche (50) versehen ist, die dazu ausgebildet ist, mit einer konkaven Oberfläche (48) der Oberseite (13) des ersten Schneideinsatzes (10) formschlüssig zusammenzuwirken, oder die Spannvorrichtung (42) mit einer konkaven Oberfläche versehen ist, die dazu ausgebildet ist, mit einer konvexen Oberfläche der Oberseite (13) des ersten Schneideinsatzes (10) formschlüssig zusammenzuwirken.

8. Fräswerkzeug nach einem der vorangehenden Ansprüche, **dadurch gekennzeichnet, dass** die erste Kassette (6) mit zumindest einer ersten Anlagefläche (12) und zumindest einer zweiten Anlagefläche (14) versehen ist, mit denen sich die erste Kassette (6) an zumindest einer ersten Gegenfläche und zumindest einer zweiten Gegenfläche des Grundkörpers (2) abstützt.

9. Fräswerkzeug nach einem der vorangehenden Ansprüche, **dadurch gekennzeichnet, dass** die erste Kassette (6) unverschiebbar an dem Grundkörper (2) festgelegt ist.

10. Fräswerkzeug nach einem der vorangehenden Ansprüche, **dadurch gekennzeichnet, dass** die erste Kassette (6) durch zumindest zwei Schrauben (16) an dem Grundkörper (2) befestigt ist, die die erste Kassette (6) in axialer Richtung (Z) und radialer Richtung (X) gegen den Grundkörper (2) spannen.

11. Fräswerkzeug nach einem der vorangehenden Ansprüche, **dadurch gekennzeichnet, dass** der Grundkörper (2) mit einer Mehrzahl von Ausnehmungen (4) zur Aufnahme von jeweiligen Schneideinsätzen (10) und zugeordneten Kassetten (6; 8) versehen ist.

12. Fräswerkzeug nach Anspruch 11, **dadurch gekennzeichnet, dass** die Ausnehmungen (4) identisch ausgebildet sind.

13. Fräswerkzeug nach einem der vorangehenden Ansprüche, **dadurch gekennzeichnet, dass** die erste Kassette (6) derart ausgebildet ist, dass die in axialer Richtung (Z) hervorstehende Schneidkante (40) des ersten Schneideinsatzes (10) zumindest abschnittsweise im Wesentlichen senkrecht zu der Rotationsachse (R) ausgerichtet ist.

14. Fräswerkzeug nach einem der vorangehenden Ansprüche, **dadurch gekennzeichnet, dass** das Fräswerkzeug zumindest eine, in einer weiteren Ausnehmung (4) lösbar befestigte, zweite Kassette (8) aufweist zur Aufnahme eines weiteren, zu dem ersten Schneideinsatz (10) identischen Schneideinsatzes (10) derart, dass der weitere Schneideinsatz (10) in axialer Richtung (Z) mit einer Schneidkante (52) in einer von der Ausrichtung der Schneidkante (40) des ersten Schneideinsatzes (10) verschiedenen Ausrichtung hervorsteht.

15. Fräswerkzeug nach Anspruch 14, **dadurch gekennzeichnet, dass** die zweite Kassette (8) derart ausgebildet ist, dass die in axialer Richtung (Z) hervorstehende Schneidkante (52) des weiteren Schneideinsatzes (10) unter einem Winkel größer 5°, bevorzugt größer 7° relativ zu einer Ebene (E) senkrecht zu der Rotationsachse (R) verläuft.

## Claims

1. A milling tool, having:
a base body (2) comprising a predetermined rotation axis (R) and at least one recess (4) for accommodating an exchangeable first cutting insert (10) such that the first cutting insert (10) protrudes from the base body (2) in an axial direction (Z) with a cutting edge (40),
an adjusting mechanism (26, 24, 22) for adjusting the position of the first cutting insert (10) in the axial direction (Z), and
a clamping device (42) for fixing the first cutting insert (10) in the recess (4);
wherein the adjusting mechanism (26, 24, 22) comprises an articulated arm (22) being adapted as an abutment for at least one lateral surface of the first cutting insert (10),
**characterized in that**
the first cutting insert (10) directly rests against the base body (2) with its lower side and
the milling tool comprises a first cartridge (6), which is removably fastened in the recess (4) and comprises the articulated arm (22), for fixing at least two lateral surfaces of the first cutting insert (10).

2. The milling tool according to claim 1, **characterized in that** the clamping device (42) is adapted for positive-fitting interaction with the upper side (13) of the first cutting insert (10).

3. The milling tool according to claim 1 or 2, **characterized in that** the adjusting mechanism (26, 24, 22) comprises an adjustment screw (26) having a conical section (34) for deflecting the articulated arm (22) of the first cartridge (6).

4. The milling tool according to claim 3, **characterized in that** the adjustment mechanism (26, 24, 22) comprises an adjusting element (24) being formed separately from the first cartridge (6), the adjusting element (24) interacting with the conical section (34) of the adjustment screw (26) for adjustment in the axial direction (Z).

5. The milling tool according to any one of the preceding claims,
**characterized in that** the first cutting insert (10) is fixed in the milling tool such that only uniaxial adjustment of the position of the cutting insert (10) in the axial direction (Z) is enabled.

6. The milling tool according to any one of the preceding claims,
**characterized in that** the recess (4) and the first cartridge (6) are adapted for accommodating the first cutting insert (10) such that the first cutting insert (10) also protrudes from the base body (2) in a radial direction (X).

7. The milling tool according to any one of the preceding claims,
**characterized in that**
the clamping device (42) is provided with a convex surface (50) adapted to interact with a concave surface (48) of the upper side (13) of the first cutting insert (10) in a positive-fitting manner, or
the clamping device (42) is provided with a concave surface adapted to interact with a convex surface of the upper side (13) of the first cutting insert (10) in positive-fitting manner.

8. The milling tool according to any one of the preceding claims,
**characterized in that** the first cartridge (6) is provided with at least one first abutment surface (12) and at least one second abutment surface (14) with which the first cartridge (6) rests against at least one first counter-surface and at least one second counter-surface of the base body (2).

9. The milling tool according to any one of the preceding claims,
**characterized in that** the first cartridge (6) is immovably fixed to the base body (2).

10. The milling tool according to any one of the preceding claims,
**characterized in that** the first cartridge (6) is fixed to the base body (2) by at least two screws (16) which clamp the first cartridge (6) against the base body (2) in the axial direction (Z) and in the radial direction (X).

11. The milling tool according to any one of the preceding claims,
**characterized in that** the base body (2) is provided with a plurality of recesses (4) for accommodating respective cutting inserts (10) and associated cartridges (6; 8).

12. The milling tool according to claim 11, **characterized in that** the recesses (4) are formed identically.

13. The milling tool according to any one of the preceding claims,
**characterized in that** the first cartridge (6) is formed such that the cutting edge (40) of the first cutting insert (10), which cutting edge (40) protrudes in the axial direction (Z), is aligned substantially perpendicular to the rotation axis (R) in at least one section.

14. The milling tool according to any one of the preceding claims,
**characterized in that** the milling tool comprises at least one second cartridge (8) removably fastened in a further recess (4) for accommodating a further cutting insert (10) being identical to the first cutting insert (10) such that the further cutting insert (10) protrudes in the axial direction (Z) with a cutting edge (52) being aligned different to the alignment of the cutting edge (40) of the first cutting insert (10).

15. The milling tool according to claim 14, **characterized in that** the second cartridge (8) is formed such that the cutting edge (52) of the further cutting edge (10), which cutting edge (52) protrudes in the axial direction (Z), extends at an angle larger than 5°, preferably larger than 7°, relative to a plane (E) which is perpendicular to the rotation axis (R).

## Revendications

1. Outil de fraisage comprenant
- un corps d'outil (2) qui présente un axe de rotation (R) prédéfini et au moins une cavité (4) qui reçoit un premier insert de coupe (10) interchangeable de manière telle que ledit premier insert de coupe (10) dépasse avec une arête de coupe (40) du corps d'outil (2), dans la direction axiale (Z),
- un mécanisme de réglage (26, 24, 22) permettant de modifier la position du premier insert de coupe (10) dans la direction axiale (Z) et
- un dispositif de serrage (42) permettant de fixer le premier insert de coupe (10) dans la cavité (4),
dans lequel ledit mécanisme de réglage (26, 24, 22) est doté d'un bras pivotant configuré en tant que butée pour au moins une surface latérale du premier insert de coupe (10), **caractérisé en ce que** ledit premier insert de coupe (10) s'appuie avec sa surface inférieure directement sur le corps d'outil (2) et **en ce que** ledit outil de fraisage est équipé d'une première cassette (6) fixée amovible dans la cavité (4), cassette sur laquelle est présent le bras pivotant (22) et qui est destinée à bloquer au moins deux surfaces latérales du premier insert de coupe (10).

2. Outil de fraisage selon la revendication 1, **caractérisé en ce que** le dispositif de serrage (42) est configuré pour agir par coopération de forme avec la surface supérieure (13) du premier insert de coupe (10).

3. Outil de fraisage selon la revendication 1 ou 2, **caractérisé en ce que** le mécanisme de réglage (26, 24, 22) inclut une vis de réglage (26) comprenant une partie conique (34) destinée à faire pivoter le bras (22) de la première cassette (6).

4. Outil de fraisage selon la revendication 3, **caractérisé en ce que** le mécanisme de réglage (26, 24, 22) comprend un élément de réglage (24) réalisé séparément de la première cassette (6) et qui coopère avec la partie conique (34) de la vis de réglage (26) pour modifier la position dans la direction axiale (Z).

5. Outil de fraisage selon l'une quelconque des revendications précédentes, **caractérisé en ce que** le premier insert de coupe (10) est fixé dans l'outil de manière telle que la position dudit insert (10) ne peut être modifiée, dans la direction axiale (Z), que sur un seul axe.

6. Outil de fraisage selon l'une quelconque des revendications précédentes, **caractérisé en ce que** la cavité (4) et la première cassette (6), qui reçoivent le premier insert de coupe (10), sont configurées de manière telle que ce dernier dépasse du corps d'outil (2) également dans une direction radiale (X).

7. Outil de fraisage selon l'une quelconque des revendications précédentes, **caractérisé en ce que** le dispositif de serrage (42) possède soit une surface supérieure convexe (50) configurée de façon à agir par coopération de forme avec une surface supérieure concave (48) de la partie supérieure (13) du premier insert de coupe (10), soit une surface supérieure concave configurée de façon à agir par coopération de forme avec une surface supérieure convexe de la partie supérieure (13) du premier insert de coupe (10).

8. Outil de fraisage selon l'une quelconque des revendications précédentes, **caractérisé en ce que** la première cassette (6) possède au moins une première surface d'appui (12) et au moins une seconde surface d'appui (14) par le biais desquelles ladite première cassette (6) s'appuie contre au moins une première surface de butée et au moins une seconde surface de butée du corps d'outil (2).

9. Outil de fraisage selon l'une quelconque des revendications précédentes, **caractérisé en ce que** la première cassette (6) est fixée non coulissante au corps d'outil (2).

10. Outil de fraisage selon l'une quelconque des revendications précédentes, **caractérisé en ce que** la première cassette (6) est fixée au corps d'outil (2) à l'aide d'au moins deux vis (16) assurant le serrage de ladite cassette contre le corps d'outil (2), dans la direction axiale (Z) et dans la direction radiale (X).

11. Outil de fraisage selon l'une quelconque des revendications précédentes, **caractérisé en ce que** le corps d'outil (2) est doté d'une pluralité de cavités (4) qui, respectivement, reçoivent un insert de coupe (10) et une cassette (6 ; 8) associée.

12. Outil de fraisage selon la revendication 11, **caractérisé en ce que** les cavités (4) sont de forme identique.

13. Outil de fraisage selon l'une quelconque des revendications précédentes, **caractérisé en ce que** la première cassette (6) est configurée de manière telle que l'arête de coupe (40) du premier insert de coupe (10), autrement dit l'arête dépassant dans la direction axiale (Z), est orientée, pour l'essentiel et au moins pour partie, perpendiculairement à l'axe de rotation (R).

14. Outil de fraisage selon l'une quelconque des revendications précédentes, **caractérisé en ce que** ledit outil est équipé d'au moins une seconde cassette (8) fixée amovible dans une cavité (4) additionnelle et conçue pour recevoir un insert de coupe additionnel (10) identique au premier, de sorte telle que ledit insert de coupe additionnel (10) dépasse avec une arête de coupe (52) dans la direction axiale (Z), selon une orientation différente de celle de l'arête de coupe (40) du premier insert de coupe (10).

15. Outil de fraisage selon la revendication 14, **caractérisé en ce que** la seconde cassette (8) est configurée de façon telle que l'arête de coupe (52) de l'insert de coupe additionnel (10), autrement dit l'arête dépassant dans la direction axiale (Z), s'étend selon un angle supérieur à 5 degrés, de préférence supérieur à 7 degrés, par rapport à un plan (E) perpendiculaire à l'axe de rotation (R).
